# FASCICULE DE BREVET EUROPEEN

(11) **EP 2 649 520 B1**
(45) Date de publication et mention de la délivrance du brevet: **27.02.2019**
(21) Numéro de dépôt: 11794118.7
(22) Date de dépôt: 06.12.2011
(51) Int. Cl.: G06F 8/71, G06F 8/61, H04L 29/08, G06F 9/445

(54) **DISTRIBUTION D'APPLICATION DÉLIVRANT UNE APPLICATION DÉDIÉE À UN TERMINAL À PARTIR D'UNE APPLICATION DÉPOSÉE PAR LE DÉVELOPPEUR**
ANWENDUNGSVERTEILUNG ZUR BEREITSTELLUNG EINER DEDIZIERTEN ANWENDUNG AN EIN ENDGERÄT AUS EINER VOM ENTWICKLER DEPONIERTEN ANWENDUNG
APPLICATION DISTRIBUTION SUPPLYING A DEDICATED APPLICATION TO A TERMINAL FROM AN APPLICATION DEPOSITED BY THE DEVELOPER

(30) Priorité: 06.12.2010 FR 1060150
(43) Date de publication de la demande: 16.10.2013
(73) Titulaire: Google LLC, Mountain View, CA 94043 (US)
(72) Inventeur: CABILLIC, Gilbert, F-35530 Brece (FR); LESOT, Jean-Philippe, F-35370 Argentre Du Plessis (FR)
(74) Mandataire: Betten & Resch
(86) Numéro de dépôt international: PCT/EP2011/071979
(87) Numéro de publication internationale: WO 2012/076554

(56) Documents cités:
- US-A1- 2005 091 349
- US-A1- 2006 143 601
- US-A1- 2009 158 270

## Description

### 1 DOMAINE DE L'INVENTION

L'invention concerne le domaine de la distribution d'application. L'invention se rapporte plus particulièrement à un nouveau moyen et à une nouvelle méthode de distribution d'application.

### 2 SOLUTIONS DE L'ART ANTÉRIEUR

Depuis quelques temps sont apparu des services de distribution en ligne d'applications. Ces services permettent à un utilisateur de téléphone mobile, de tablette, de TV, de télécharger une application sur son appareil. Plus généralement, des services de distribution en ligne permettant de mettre à disposition des applications pour des terminaux à travers un réseau se généralisent.

Parfois le téléchargement est gratuit, ou parfois payant afin de rémunérer le service de distribution en ligne et/ou les droits d'utilisation de l'application. Ces droits sont reversés ensuite partiellement ou totalement au développeur d'applications qui a déposé son application dans le service de distribution en ligne. Le développeur a donc ici un rôle clé pour ces services de distribution en ligne car c'est celui qui permet de fournir les applications à distribuer sur le service de distribution en ligne.

De son côté, le développeur doit avant tout développer son application pour les terminaux pour lesquels il désire proposer son application (un terminal peut être un ordinateur, un téléphone, un assistant personnel programmable, etc.).

Ainsi le développeur va tout d'abord choisir les terminaux pour lesquels il va développer et va ensuite utiliser un ou plusieurs environnements de développement permettant de développer pour ces terminaux et générer un code d'application exécutable sur les terminaux choisis.

Il existe des environnements de développement produisant du code binaire directement exécutable par le processeur du terminal. Dans ce cas, le terminal dispose préalablement des interfaces de programmations (APIs) utilisées pour développer l'application et dans ce cas le développeur doit porter/optimiser son application pour chaque terminal ayant des processeurs différents et des APIs différentes.

À titre d'exemple, on peut citer le système Windows ou Linux qui peut s'exécuter sur différents processeurs avec différents périphériques. Le concepteur d'une application la développe pour qu'elle utilise des librairies compatibles, l'application étant ensuite compilée en code binaire via l'environnement de développement. Le code binaire étant dépendant de chaque processeur, il faut développer un code binaire par type de processeur.

De son coté, bien que se basant sur du code binaire, l'iPhone OS (iOS™) permet également de masquer différentes plateformes de terminaux iOS en se basant sur une version d'iPhone™ OS (iPhone 2G, 3G, 3GS, 4, iPad™). L'iPhone OS met en oeuvre la technique de «binaire universel », qui n'est autre qu'un simple binaire renfermant plusieurs versions du binaire en fonction du processeur cible.

D'autres environnements de développement génèrent un code intermédiaire exécutable au travers d'un runtime (de l'anglais pour « environnement d'exécution de la machine virtuelle ») comprenant un ensemble de librairies et une machine virtuelle. Dans ce cas, ces environnements de développement permettent de cibler tous les terminaux compatibles avec ce runtime. Notons qu'une telle machine virtuelle peut soit comporter un interpréteur qui émule les instructions de code intermédiaire sur la machine, soit permet de compiler à l'aide d'un AOT (de l'anglais pour « Ahead of Time ») le code intermédiaire en code binaire avant de l'exécuter. Notons que d'autres techniques de compilation permettent de réaliser la compilation dynamique de code intermédiaire en code binaire (JIT de l'anglais pour « Just In Time » ou DAC de l'anglais pour « Dynamic Adaptative Compilation »), mais que ces techniques s'utilisent sur le terminal et doivent prendre en compte les contraintes du terminal. Aussi, elles ne permettent d'obtenir un niveau d'optimisation équivalente à ce qu'est capable de fournir un environnement de développement hors-ligne générant du binaire optimisé dépendant terminal.

Outre cette spécificité sur les environnements de développement, les terminaux offrent également différents niveaux de compatibilité de code exécutables entre eux. Ainsi il existe des terminaux utilisant un runtime supportant du code d'application binaire, et d'autres runtime utilisant une machine virtuelle capable d'exécuter du code intermédiaire. Notons également que les interfaces de programmation (APIs) ne sont pas nécessairement disponibles entre les différents environnements. À titre d'exemple une application développée pour l'iPhone ne peut s'exécuter sur Android™.

Concernant une approche avec un runtime, celui-ci permet d'abstraire totalement ou partiellement les parties spécifiques du terminal et rend plus simple la possibilité d'exécuter une application sur un ensemble de terminaux différents. Le point faible de cette approche qui permet de maximiser les développements pour un développeur est de ne pas permettre d'avoir un code optimisé totalement pour chaque terminal.

À titre d'exemple, le runtime du système Android privilégie le développement d'application en langage objet Java et offre un ensemble d'interface de programmation (API). Il existe plusieurs versions APIs. L'environnement de développement va compiler le code Java de l'application en code DEX (« Dalvik Exécutable Code ») exécutable au travers la machine virtuelle Dalvik™ intégrée au runtime Android.

Afin de distribuer l'application, l'un des moyens consiste au développeur de déposer son application sur un système de distribution d'application. Ce système de distribution permet à l'utilisateur du terminal de choisir au travers d'une interface Web, ou d'une application embarquée sur le terminal, de sélectionner les applications à être chargées sur le terminal. Une fois chargée, l'application sera installée sur le terminal, et peut être exécutée par l'utilisateur.

Dans le cadre d'Android, le développeur d'application dépose son application comprenant un code DEX sur le service de distribution en ligne « Android Market™ ». Un des avantages du code DEX est de pouvoir être chargé puis exécuté sur tous les terminaux qui comprennent une certaine version d'Android quel que soit le processeur.

L'utilisation d'un runtime à base de machine virtuelle permet ainsi d'abstraire un ensemble de plateformes de terminaux, mais cette utilisation ne permet pas tout le temps d'obtenir une application très optimisée pour une plateforme donnée (en effet, lors de leur génération le runtime est prévu pour être indépendant du processeur du terminal).

Aussi, l'optimisation de l'application ne peut être réellement réalisée que sur le terminal. Comme indiqués précédemment, les machines virtuelles renferment de nos jours des compilateurs AOT, JIT, ou DAC, connus de l'homme du métier, consommant eux même du temps processeur et de l'énergie. Ce compromis à obtenir ne permet pas de réaliser sur un code applicatif des optimisations équivalentes à celles des compilateurs hors-lignes malgré les ressources qu'elles utilisent.

La demande de brevet américain US2006/143601 divulgue un serveur de déploiement d'application permettant de générer des applications optimisées pour des dispositifs requérants. La demande de brevet américain US2009/158270, US2005/091349 porte sur un serveur de mise à disposition d'applications pour des postes de travail Windows. La demande de brevet américain US2005/091349 se rapporte à la mise en oeuvre d'ordinateur en réseau. Les techniques proposées par les demandes de brevet américain susmentionnées ne permettent pas de générer un code dédié ayant une meilleure performance, une compatibilité et une rapidité accrues.

### 3 RESUME DE L'INVENTION

L'invention ne présente pas ces inconvénients de l'art antérieur. L'invention, comme définie par les revendications indépendantes, se rapporte à un procédé de mise à disposition auprès d'un service de distribution en ligne depuis un code d'application générique d'une application dédiée à un type de terminal.

Selon une implémentation préférée, les différentes étapes du procédé selon l'invention sont mises en oeuvre par un logiciel ou programme d'ordinateur, ce logiciel comprenant des instructions logicielles destinées à être exécutées par un processeur de données d'un module relais selon l'invention et étant conçu pour commander l'exécution des différentes étapes de ce procédé.

En conséquence, l'invention vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

### 4 LISTE DES FIGURES

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 décrit le principe général de l'invention ;
- la figure 2 décrit le processus de compilation d'application peu après le dépôt de celle-ci sur le service de distribution en ligne ;
- la figure 3 décrit le processus de compilation d'application lors de l'ajout d'un nouveau type de terminal supporté ;
- la figure 4 décrit un dispositif de mise à disposition selon l'invention.

### 5 DESCRIPTION DÉTAILLÉE DE L'INVENTION

### 5.1 Rappel du principe de l'invention

Le procédé décrit ci-après répond ne comprend pas les problèmes de l'état de l'art à la fois en permettant d'automatiser la génération de plusieurs codes applicatifs dédiés à partir d'un seul code applicatif d'origine pour un terminal dédié, ainsi qu'en permettant à des développeurs de diffuser leur application à des terminaux précédemment non supportés, ou encore en permettant de générer automatiquement un code applicatif pour des terminaux ayant changés leurs spécifications (matériel et/ou logiciel).

La base du procédé s'appuie sur un ou plusieurs compilateurs capables de générer un code dédié pour une plateforme d'un terminal donné depuis un code d'application qui sera mis à disposition par le développeur sur le serveur.

Le code en entrée du compilateur peut être sous différentes formes : code source ou code intermédiaire. Le compilateur compile ce code dans un nouveau code dédié sur une plateforme d'un terminal donné. Le code généré peut être sous la forme de code binaire, ou de code intermédiaire ou de mélange de code binaire/intermédiaire.

Ces différents compilateurs permettent de dédier le code de l'application de façon différente en fonction du terminal cible de l'utilisateur et de l'objectif à atteindre. Chaque compilateur dispose en effet d'une série d'optimisations particulières ou de possibilités de générations pouvant être utilisées sur le code d'entrée en fonction du terminal cible.

Dans certaines implémentations, le compilateur dispose d'optimisations permettant de générer un code dédié dans l'objectif d'une meilleure performance (temps d'exécution, accès mémoire ou consommation d'énergie). Le code généré peut être sous format binaire ou sous format intermédiaire en fonction des capacités du compilateur. Les optimisations peuvent être de plusieurs ordres :
- Optimisation ciblant un processeur particulier. Elles permettent d'insérer des instructions spécifiques du processeur. D'autres optimisations permettant de gérer un flot d'instruction propre au pipeline du processeur et permettent de rationaliser les dépendances entre instructions, permettant de limiter les « stalls » bloquant le pipeline du processeur.
- Optimisation ciblant la hiérarchie mémoire du processeur. Leur objectif est d'optimiser l'accès aux caches des différents niveaux mémoires jusque la mémoire principale ou la mémoire de périphérique. Elles permettent de limiter le nombre d'accès data ou code ou de les grouper pour obtenir une meilleure localité. Ainsi, le nombre de « stall » introduits sur le pipeline du processeur à cause de la latence nécessaire pour rapatrier les données est réduit. Le fait de grouper les données permettra également de limiter ces accès mémoire.
- Optimisations sur les périphériques des plateformes. Telle que l'utilisation de spécificité de certains périphériques permettant d'optimiser la plateforme. Exemple : floating point, GPU 2D ou 3D, Réseau, ....
- Optimisation du code intermédiaire amené à être exécuté sur une machine virtuelle. Cette optimisation permet notamment de pouvoir produire un code mixte comportant du binaire optimisé et du code intermédiaire. Cette optimisation permet de pouvoir optimiser de façon importante les codes intermédiaires des environnements à base de machines virtuelles, telle que Android.
- Optimisation permettant de générer du code privilégiant les instructions à faible consommation d'énergie.
- Toute autre optimisation de l'état de l'art pouvant être utilisée et permettant d'optimiser une plateforme d'exécution,...

Dans certaines implémentations, le compilateur peut également disposer de différentes optimisations permettant de réduire la taille du code de l'application. En effet, les applications devant être transmises du serveur sur le terminal cible via un réseau pouvant être sans fil, la réduction de la taille du code à envoyer sur le terminal permet de diminuer le temps de chargement des applications par l'utilisateur. Par ailleurs, dans le cas d'un code intermédiaire destiné à être compilé en binaire sur le terminal, le fait d'avoir réduit la taille du code à envoyer sur le terminal, réduit de manière drastique le temps de compilation en binaire de ce code intermédiaire sur le terminal cible.

De plus, lorsque l'application est sous format source ou code intermédiaire, il est possible de convertir celle-ci vers un code binaire, vers un autre code intermédiaire, ou vers un autre code source. Grâce à cette possibilité de conversion dédiée, une implémentation particulière de l'invention permet d'atteindre un terminal non supporté initialement, et ce de manière transparente pour le développeur.

Concernant le service de distribution en ligne, ce dernier repose sur une architecture qui permet :
**1.** De stocker des codes d'applications sur des périphériques de stockage.
**2.** Aux développeurs de déposer des applications en format exécutable par le terminal sur le serveur et de gérer les différentes versions de ces dépôts.
**3.** À un utilisateur du terminal d'acheter, et/ou de télécharger une application pour son terminal.

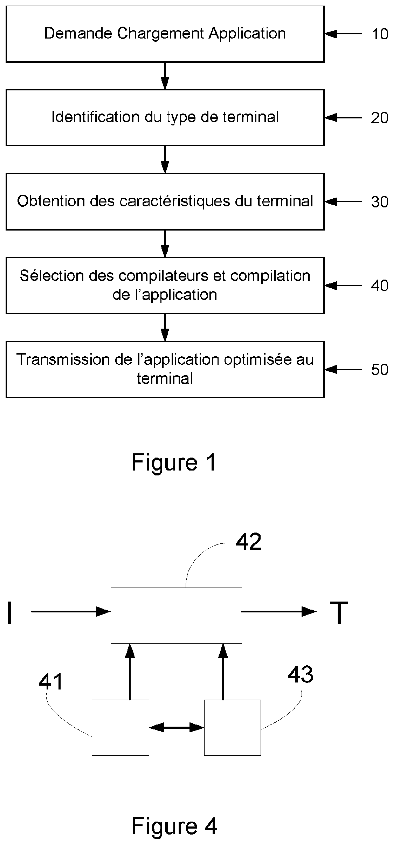

La figure 1 décrit le principe de fonctionnement de l'invention. Un terminal d'un utilisateur se connecte au service de distribution en ligne pour obtenir une application.

La première étape (20, fig 1) consiste à identifier le type du terminal de l'utilisateur (un identifiant), lors d'une demande préalable de chargement d'une application (10, fig 1). Ceci permet au service de distribution en ligne de sélectionner dynamiquement les différents compilateurs ainsi que les optimisations à appliquer afin d'optimiser le code de l'application pour ce terminal. Le terminal peut notamment indiquer son type lors de la connexion au serveur de distribution, ou par tout autre moyen.

Une fois le type du terminal identifié, la deuxième étape (30, fig 1) consiste à charger le profil contenant les caractéristiques sur terminal. Ce profil décrit par exemple le processeur utilisé, la hiérarchie mémoire, les périphériques et coprocesseurs disponibles. Il peut également décrire la version des APIs supportées, le code binaire ou intermédiaire supporté ainsi que leur version, ou toute autre information permettant de choisir la compilation à appliquer afin de dédier le code pour ce terminal.

Dans une implémentation particulière ces informations peuvent être stockées dans le service de distribution en ligne. Une base de donnée permet, grâce à l'identifiant du type de terminal de récupérer le profil contenant les caractéristiques de ce terminal. Dans une autre implémentation, le profil peut être transmis directement par le terminal au serveur de distribution au travers de la demande de chargement de l'application, ou sur demande du serveur de distribution.

Dans une autre implémentation il est également possible d'associer un compilateur par type d'appareil, et d'embarquer ce profil directement dans le compilateur. Un fabricant d'appareil peut ainsi déposer sur le service de distribution en ligne le profil et/ou le compilateur pour gérer au mieux l'optimisation des applications pour ses terminaux.

Dans la troisième étape (40, fig 1), le serveur de distribution va activer les différents compilateurs, avec leur configuration associée afin d'obtenir le code de l'application dédiée à transmettre au terminal (50, fig 1). Le moment où cette compilation est réalisée peut varier selon les architectures des services de distribution en ligne.

Dans une implémentation particulière, la compilation peut être réalisée lors de la demande d'un téléchargement par un utilisateur du service de distribution en ligne. Ainsi, lorsque l'utilisateur demande le téléchargement d'une application, le compilateur permettant de compiler l'application pour le téléphone de l'utilisateur est utilisé pour obtenir le code binaire de l'application qui est téléchargé par l'utilisateur. Ce principe impacte néanmoins la latence nécessaire pour que l'utilisateur charge l'application, la compilation étant faite à la demande. Un cache peut être mis en place pour limiter cette latence. Toutes les techniques d'évictions de cache peuvent alors gérer la taille de celui-ci en fonction des caractéristiques du service de distribution en ligne et de la qualité de service qu'il doit délivrer.

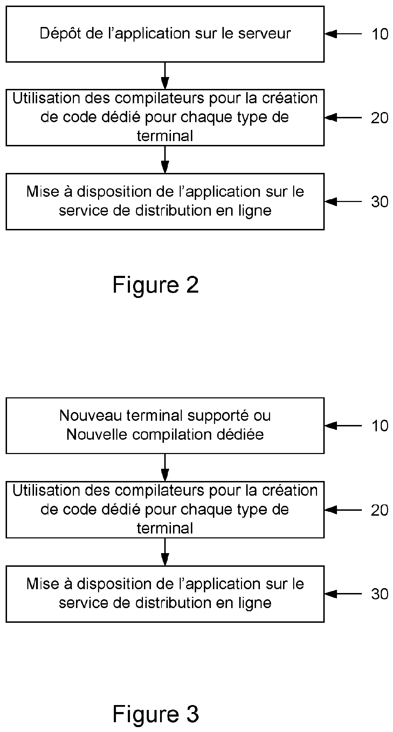

Dans une implémentation particulière, (fig 2) la compilation peut être réalisée lors du dépôt de l'application par le développeur sur le serveur (10, fig 2) Dans ce cas, le service de distribution en ligne utilise un ou plusieurs compilateurs pour compiler le code déposé et créer une version dédiée pour chaque type terminal (20 , fig 2).

Une fois optimisée, l'application est mise à disposition sur le service de distribution en ligne (30 , fig 2). Ce principe impacte le moment où l'application est mise à disposition des utilisateurs du service de distribution en ligne car il est nécessaire d'attendre que les différentes versions soient générées pour que l'application soit mise à disposition des utilisateurs. Elle permet néanmoins de supprimer les temps de compilation de l'application sur demande.

La compilation peut également se faire dès lors que le dépôt est effectué en parallèle du fonctionnement standard du service de distribution en ligne. Ainsi, plutôt que de générer les différentes versions lors du dépôt, le service de distribution en ligne anticipe la compilation de l'application lors du fonctionnement normal du service de distribution en ligne. Si l'application demandée par un utilisateur est déjà prête, il peut ainsi la transmettre directement, sans avoir à la compiler. Dans le cas contraire (l'application n'est pas prête), l'application est compilée à la demande et stockée sur le service de distribution en ligne.

Dans une autre implémentation particulière (fig 3) les compilations dédiées peuvent être réalisés par le serveur pour chacune des applications génériques dès lors qu'un nouveau terminal est supporté ou qu'une nouvelle compilation dédiée est sélectionnée pour un terminal donné. Ainsi, dès lors qu'un nouveau terminal est supporté, ou qu'une nouvelle compilation dédiée est mise en place pour un terminal donné (10 ; fig 3), les compilateurs sont utilisés pour générer le code dédié à ce terminal depuis le code de l'application générique (20 ; fig 3). Ces codes sont stockés sur le serveur. Dès que le code dédié est prêt, il est mis à disposition des utilisateurs sur le service de distribution en ligne (30 ; fig3).

Bien sûr ces différentes approches peuvent être combinées entre elles afin de tenir compte des spécificités des architectures du service de distribution en ligne, de leur coût, de leur moyen (nombre de serveurs, quota de disque...) ou du niveau de qualité de service pour les utilisateurs (plus ou moins d'attente pour l'obtention du code dédié). Aussi, bien que ces méthodes sont les principes de base du service de distribution en ligne, elles peuvent être aménagées et déclinées entre elles.

La figure 4 représente de manière simplifiée un exemple de structure d'un dispositif de mise à disposition selon un mode de réalisation de l'invention.

Par exemple, le dispositif de mise à disposition comprend une mémoire 41 constituée d'une mémoire tampon, une unité de traitement 42, équipée par exemple d'un microprocesseur et de mémoire vive, et pilotée par le programme d'ordinateur 43, mettant en oeuvre un procédé de mise à disposition selon l'invention.

À l'initialisation, les instructions de code du programme d'ordinateur 43 sont par exemple chargées dans une mémoire avant d'être exécutées par le processeur de l'unité de traitement 42. Le microprocesseur, la mémoire vive, le programme d'ordinateur coopèrent ensemble et forment les moyens de mise en oeuvre du procédé de l'invention dans ce mode de réalisation. Dans d'autres modes de réalisation des modules matériels de traitement spécifique peuvent être implémentés pour mettre en oeuvre l'invention.

### 5.2 Description d'un mode de réalisation particulier.

À titre d'exemple ont décrit ci-après une implémentation particulière du procédé intégré au service de distribution en ligne « Android Market».

Comme indiqué précédemment, dans le cadre de l'Android Market, le développeur d'application dépose son application comprenant un code DEX sur l'Android Market. L'avantage du code DEX étant de pouvoir être chargé puis exécuté sur tous les terminaux Android disposant de la machine virtuelle Davik. L'Android Market stocke l'ensemble des applications et la rend visible aux utilisateurs de l'Android Market au travers d'une application « market » intégrée au terminal Android.

Lorsqu'un utilisateur le désire, il peut choisir une application à l'aide de l'application market, et demander le téléchargement de celle-ci sur son terminal. Une fois téléchargée, l'installation de l'application est réalisée par le système Android et l'utilisateur peut l'exécuter.

Dans le cadre de l'Android Market, le type du terminal peut être un identifiant. Grâce à cet identifiant, les caractéristiques du terminal sont connues et comprennent par exemple la version du système Android s'exécutant dans le terminal (par exemple : Gingerbread 2.3, Eclair 2.1, Honeycomb 3,...), ainsi que le nom du produit vendeur, et le type de la plateforme matérielle (par exemple, ARM, ou X86). D'autres informations propres à chaque terminal peuvent y être incluses.

Ensuite, grâce à ces caractéristiques, l'Android Market peut, dans ce mode de réalisation, optimiser l'application de différentes manières grâce à l'utilisation de différents compilateurs.

Dans une implémentation particulière, un optimiseur de code DEX permettant d'obtenir un code DEX dédié est utilisé afin de dédier le code DEX de l'application pour un terminal particulier. Ce code dédié est transmis au terminal cible (celui qui fait la demande de téléchargement).

Dans une autre implémentation, un code binaire dédié à un terminal est généré à partir du code DEX et transféré sur le terminal cible afin de bénéficier de l'ensemble des optimisations possibles pouvant être réalisées sur le serveur. Par exemple, le binaire peut être produit à l'aide d'un compilateur DEX code vers code binaire.

Dans une autre implémentation, le terminal cible supporte l'exécution de code intermédiaire bitcode LLVM (de l'anglais pour « Low Level Virtual Machine »). LLVM est une infrastructure de compilateur qui est conçue pour optimiser la compilation, l'édition de liens, l'exécution et les temps morts dans un programme écrit dans un langage quelconque.

Les outils de compilation LLVM comprennent notamment un ensemble d'outils de compilation se basant sur un code intermédiaire nommé « bitecode ». LLVM comporte notamment un optimiseur capable de transformer de manière optimisée un code bitecode en un code bitecode optimisé indépendant du processeur. Cet optimiseur possède de très nombreuses options d'optimisations. LLVM possède également plusieurs générateurs de code binaire. Ces générateurs peuvent s'exécuter soit sur le terminal, soit sur un serveur ou une machine de développement. LLVM présente l'avantage de disposer d'un grand nombre de générateurs pour différents type de processeur, ainsi qu'un nombre important d'optimisations utilisables de façon indépendante du processeur cible.

Dans une autre implémentation particulière, le bitecode LLVM peut être également dédié, sur le serveur, à différents niveaux en fonction des caractéristiques du terminal.

Dans une implémentation particulière, l'optimiseur de bitecode LLVM est utilisé pour compresser le code de l'application à transférer au terminal requérant. Dans une autre implémentation, l'optimiseur de bitecode est utilisé pour générer un code tenant compte des caractéristiques particulières du terminal. Le code généré devient ainsi dépendant par exemple des interfaces internes de programmation des applications.

Dans une autre implémentation, l'optimiseur de bitecode LLVM est utilisé pour générer un bitecode qui tient compte des caractéristiques particulières du terminal et qui est également compressé. Le code généré devient ainsi dépendant par exemple des interfaces de programmation des applications, et compressé afin de limiter la taille de l'application à transférer.

Dans une autre implémentation, dans le cas particulier d'Android et si ce dernier devait être amené à supporter l'exécution de code bitecode, la compilation de DEX code vers bitecode offre un moyen d'atteindre les terminaux ne supportant pas le DEX code.

Dans une autre implémentation, une combinaison de compilateurs peut être faite. Dans le cas précédent, il sera possible d'utiliser l'optimiseur bitecode LLVM, ainsi que le générateur binaire LLVM pour dédié l'application au terminal.

## Revendications

1. Procédé de mise à disposition, auprès d'un service de distribution en ligne, d'une application dédiée à un type de terminal, **caractérisé en ce qu'**il comprend :
- une étape d'identification (20) d'un type de terminal associé à un terminal connecté audit service de distribution en ligne, délivrant un identifiant de type de terminal ;
- une étape d'obtention (30) d'au moins une caractéristique dudit terminal en fonction dudit identifiant de type de terminal, ladite au moins une caractéristique appartenant au groupe comprenant :
- la version des interfaces de programmation APIs supportées ;
- le code binaire ou intermédiaire supporté ;
- la version du code binaire ou intermédiaire supporté ;
- une étape de compilation (40) de ladite application dédiée à partir d'une application générique en fonction de ladite au moins une caractéristique dudit type de terminal, ladite étape de compilation comprenant :
- une étape de sélection, parmi une pluralité de compilateurs disponibles, d'au moins un compilateur associé audit type dudit terminal ;
- une étape de sélection, en fonction de ladite au moins une caractéristique dudit terminal, d'au moins une optimisation à appliquer à ladite application, ladite au moins une optimisation comprenant une optimisation de code intermédiaire pour qu'il soit dépendant desdites APIs supportées et compressé afin de limiter la taille de ladite application;
- une étape de compilation de ladite application à l'aide dudit au moins un compilateur sélectionné, de ladite au moins une optimisation sélectionnée et de ladite application générique;
- une étape de transmission (50) de ladite application dédiée audit terminal connecté.

2. Procédé selon la revendication 1, **caractérisé en ce que** ladite étape d'obtention (30) d'au moins une caractéristique dudit terminal comprend :
- une étape d'obtention d'un profil de compilation associé audit identifiant dudit type de terminal, ledit profil de compilation comprenant au moins une caractéristique dudit terminal connecté ;
- une étape de sélection, parmi ledit profil de compilation, de ladite au moins une caractéristique dudit terminal.

3. Procédé selon la revendication 2, **caractérisé en ce que** ladite étape d'obtention (30) profil de compilation associé audit type de terminal comprend :
- une étape de recherche, au sein d'une base de données de profil, d'un profil de compilation associé audit identifiant de type de terminal ; et
- lorsque ladite recherche délivre un profil existant, une étape de fourniture dudit profil de compilation associé audit type de terminal ;
- lorsque ladite recherche ne délivre pas de profil, une étape de fourniture d'un profil d'optimisation par défaut.

4. Procédé, selon la revendication 1, **caractérisé en ce que** ladite étape d'obtention (30) de caractéristique de terminal et ladite étape de compilation de ladite application en fonction de ladite au moins une caractéristique sont mise en oeuvre lors du dépôt de ladite application générique au sein dudit service de distribution en ligne.

5. Dispositif de mise à disposition, auprès d'un service de distribution en ligne, d'une application dédiée à un type de terminal, **caractérisé en ce qu'**il comprend :
- des moyens d'identification d'un type de terminal associé à un terminal connecté audit service de distribution en ligne, délivrant un identifiant de type de terminal ;
- des moyens d'obtention d'au moins une caractéristique dudit terminal en fonction dudit identifiant dudit type de terminal, ladite au moins une caractéristique appartenant au groupe comprenant :
- la version des interfaces de programmation APIs supportées ;
- le code binaire ou intermédiaire supporté ;
- la version du code binaire ou intermédiaire supporté ;
- des moyens de compilation de ladite application dédiée à partir d'une application générique en fonction de ladite au moins une caractéristique dudit type de terminal, lesdits moyens de compilation comprenant :
- des moyens de sélection, parmi une pluralité de compilateurs disponibles, d'au moins un compilateur associé audit type dudit terminal ;
- des moyens de sélection, en fonction de ladite au moins une caractéristique dudit terminal, d'au moins une optimisation à appliquer à ladite application, ladite au moins une optimisation comprenant une optimisation de code intermédiaire pour qu'il soit dépendant desdites APIs supportées et compressé afin de limiter la taille de ladite application;
- des moyens de compilation de ladite application à l'aide dudit au moins un compilateur sélectionné, de ladite au moins une optimisation sélectionnée et de ladite application générique;
- des moyens de transmission de ladite application dédiée audit terminal connecté.

6. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution du procédé de mise à disposition selon l'une au moins des revendications 1 à 5, lorsqu'il est exécuté sur un ordinateur.

## Patentansprüche

1. Verfahren zum Bereitstellen, bei einem Online-Verteilungsdienst, einer für einen Terminaltyp dedizierten Anwendung, **dadurch gekennzeichnet, dass** es Folgendes umfasst:
einen Schritt zum Identifizieren (20) eines Terminaltyps, der einem Terminal zugeordnet ist, das mit dem Online-Verteildienst verbunden ist, der einen Terminaltyp-Identifikator liefert;
einen Schritt zum Erhalten (30) mindestens eines Merkmals des Terminals gemäß dem Terminaltyp-Identifikator, wobei das mindestens eine Merkmal zu einer Gruppe gehört, die Folgendes umfasst:
die Version der unterstützten API-Programmierschnittstellen;
den unterstützten Binär- oder Zwischencode;
die Version des unterstützten Binär- oder Zwischencodes;
einen Schritt zum Kompilieren (40) der dedizierten Anwendung aus einer generischen Anwendung, basierend auf dem mindestens einen Merkmal des Terminaltyps, wobei der Schritt zum Kompilieren Folgendes umfasst:
einen Schritt zum Auswählen mindestens eines Compilers, der mit dem Typ des Terminals assoziiert ist, aus einer Mehrzahl von verfügbaren Compilern;
einen Schritt zum Auswählen, gemäß dem mindestens einen Merkmal des Terminals, von mindestens einer Optimierung, die auf die Anwendung anzuwenden ist, wobei die mindestens eine Optimierung eine Optimierung des Zwischencodes umfasst, so dass er von den unterstützten APIs abhängig und komprimiert ist, um die Größe der Anwendung zu begrenzen;
einen Schritt zum Kompilieren der Anwendung unter Verwendung des mindestens einen ausgewählten Compilers, der mindestens einen ausgewählten Optimierung und der generischen Anwendung;
einen Schritt zum Übertragen (50) der dedizierten Anwendung an das verbundene Terminal.

2. Verfahren nach Anspruch 1, **dadurch gekennzeichnet, dass** der Schritt zum Erhalten (30) von mindestens einem Merkmal des Terminals umfasst:
einen Schritt zum Erhalten eines Kompilierungsprofils, das mit dem Identifikator des Terminaltyps assoziiert ist, wobei das Kompilierungsprofil mindestens ein Merkmal des verbundenen Terminals beinhaltet;
einen Schritt zum Auswählen, aus dem Kompilierungsprofil, des mindestens einen Merkmals des Terminals.

3. Verfahren nach Anspruch 2, **dadurch gekennzeichnet, dass** der Schritt des Erhaltens (30) des mit dem Terminaltyp assoziierten Kompilierungsprofils umfasst:
einen Schritt zum Suchen innerhalb einer Profildatenbank nach einem Kompilierungsprofil, das mit dem Terminaltyp-Identifikator assoziiert ist; und
wenn die Suche ein bestehendes Profil liefert, einen Schritt zum Bereitstellen des Kompilierungsprofils, das mit dem Terminaltyp assoziiert ist;
wenn die Suche kein Profil bereitstellt, einen Schritt zum Bereitstellen eines voreingestellten Optimierungsprofils.

4. Verfahren nach Anspruch 1, **dadurch gekennzeichnet, dass** der Schritt des Erhaltens (30) eines Merkmals des Terminals und der Schritt des Kompilierens der Anwendung gemäß dem mindestens einen Merkmal bei der Einreichung der generischen Anwendung bei dem Online-Vertriebsdienst implementiert werden.

5. Vorrichtung zum Bereitstellen, bei einem Online-Verteilungsdienst, einer für einen Terminaltyp dedizierten Anwendung, **dadurch gekennzeichnet, dass** sie Folgendes umfasst:
Mittel zum Identifizieren eines Terminaltyps, der einem Terminal zugeordnet ist, das mit dem Online-Verteildienst verbunden ist, das einen Terminaltyp-Identifikator liefert;
Mittel zum Erhalten mindestens eines Merkmals des Terminals gemäß dem Terminaltyp-Identifikator, wobei das mindestens eine Merkmal zu einer Gruppe gehört, die Folgendes umfasst:
die Version der unterstützten API-Programmierschnittstellen;
den unterstützten Binär- oder Zwischencode;
die Version des unterstützten Binär- oder Zwischencodes;
Mittel zum Kompilieren der dedizierten Anwendung aus einer generischen Anwendung gemäß dem mindestens einen Merkmal des Terminaltyps, wobei das Kompiliermittel umfasst:
Mittel zum Auswählen mindestens eines Compilers, der mit dem Typ des Terminals assoziiert ist, aus einer Mehrzahl von verfügbaren Compilern;
Mittel zum Auswählen, als eine Funktion des mindestens einen Merkmals des Terminals, von mindestens einer Optimierung, die auf die Anwendung anzuwenden ist, wobei die mindestens eine Optimierung eine Optimierung des Zwischencodes umfasst, so dass er von den unterstützten APIs abhängig und komprimiert ist, um die Größe der Anwendung zu begrenzen;
Mittel zum Kompilieren der Anwendung unter Verwendung des mindestens einen ausgewählten Compilers, der mindestens einen ausgewählten Optimierung und der generischen Anwendung;
Mittel zum Übertragen der dedizierten Anwendung an das verbundene Terminal.

6. Computerprogrammprodukt, das aus einem Kommunikationsnetzwerk heruntergeladen werden kann und/oder auf einem computerlesbaren Medium gespeichert und/oder durch einen Mikroprozessor ausführbar ist, **dadurch gekennzeichnet, dass** es Anweisungen eines Programmcodes enthält, der, wenn er auf einem Computer ausgeführt wird, das Verfahrens nach mindestens einem der Ansprüche 1 bis 5 ausführt.

## Claims

1. A method for providing, at an online distribution service, an application dedicated to a terminal type, **characterized in that** it comprises:
a step of identifying (20) a terminal type associated with a terminal connected to said online distribution service, delivering a terminal type identifier;
a step of obtaining (30) at least one characteristic of said terminal according to said terminal type identifier, said at least one characteristic belonging to a group comprising :
the version of supported API programming interfaces;
the supported binary or intermediate code;
the version of the supported binary or intermediate code;
a step of compiling (40) said dedicated application from a generic application based on said at least one characteristic of said terminal type, said compilation step comprising:
a step of selecting, among a plurality of available compilers, at least one compiler associated with said type of said terminal;
a step of selecting, according to said at least one characteristic of said terminal, at least one optimization to be applied to said application, wherein said at least one optimization comprises an optimization of intermediate code to be dependent on said supported APIs and compressed to limit the size of said application;
a step of compiling said application using said at least one selected compiler, said at least one selected optimization, and said generic application;
a step of transmitting (50) said dedicated application to said connected terminal.

2. The method according to claim 1, **characterized in that** said step of obtaining (30) at least one characteristic of said terminal comprises:
a step of obtaining a compilation profile associated with said identifier of said terminal type, said compilation profile including at least one characteristic of said connected terminal;
a step of selecting, from among said compilation profile, said at least one characteristic of said terminal.

3. The method according to claim 2, **characterized in that** said step of obtaining (30) the compilation profile associated with said terminal type comprises:
a step of searching, within a profile database, for a compilation profile associated with said terminal type identifier; and
when said search delivers an existing profile, a step of providing said compilation profile associated with said terminal type;
when said search does not provide a profile, a of providing a default optimization profile.

4. The method, according to claim 1, **characterized in that** said step of obtaining (30) a characteristic of said terminal and said step of compiling said application according to said at least one characteristic are implemented when filing said generic application at said online distribution service.

5. A device for providing, at an online distribution service, an application dedicated to a terminal type, **characterized in that** it comprises:
means for identifying a terminal type associated with a terminal connected to said online distribution service, delivering a terminal type identifier;
means for obtaining at least one characteristic of said terminal according to said identifier of said terminal type, said at least one characteristic belonging to a group comprising:
the version of the supported API programming interfaces;
the supported binary or intermediate code;
the version of the supported binary or intermediate code;
means for compiling said dedicated application from a generic application according to said at least one characteristic of said terminal type, said compiling means comprising:
means for selecting, from among a plurality of available compilers, at least one compiler associated with said type of said terminal;
means for selecting, as a function of said at least one characteristic of said terminal, at least one optimization to be applied to said application, said at least one optimization comprising an optimization of intermediate code to be dependent on said supported APIs and compressed to limit the size of said application;
means for compiling said application using said at least one selected compiler, said at least one selected optimization, and said generic application;
means for transmission of said dedicated application to said connected terminal.

6. A computer program product downloadable from a communication network and/or stored on a computer-readable and/or microprocessor-executable medium, **characterized in that** it includes program code instructions for execution of the method provided according to at least one of claims 1 to 5 when executed on a computer.
